# DEMANDE DE BREVET EUROPEEN

(11) **EP 1 454 976 A1**
(43) Date de publication de la demande: **08.09.2004**
(21) Numéro de dépôt: 04290452.4
(22) Date de dépôt: 19.02.2004
(51) Int. Cl.: C10G 25/00, C10G 25/12, B01J 20/34

(54) **Procédé de desulfuration, de deazotation et/ou de desaromatisation d'une charge hydrocarbonée par adsorption sur un solide adsorbant usé**

(30) Priorité: 07.03.2003 FR 0302831
(71) Demandeur: Institut Français du Pétrole, 92852 Rueil-Malmaison Cedex (FR)
(72) Inventeur: Burkhardt, Thorsten, 69005 Lyon (FR); Nicolaos, Alexandre, 92800 Puteaux (FR); Diehl, Fabrice, 92500 Rueil Malmaison (FR)

(57) **Abrégé**

On décrit un procédé de purification par adsorption d'une charge hydrocarbonée mettant en oeuvre un nouvel agent d'adsorption. Cet agent d'adsorption est un solide adsorbant usé ayant servi dans une première application de traitement catalytique de charges hydrocarbonées, ou d'adsorption, et dont les performances d'adsorption ou catalytiques se sont tellement dégradées que son utilisation pour la première application est devenue impossible. L'utilisation de ce solide adsorbant usé pour la purification de charges hydrocarbonées par adsorption ne requiert pas de traitement spécifique au préalable, notamment pas de traitement thermique.

## Description

L'invention concerne un procédé de purification par adsorption, soit de désulfuration, de déazotation et/ou de désaromatisation, d'une charge hydrocarbonée en utilisant un solide adsorbant usé ayant servi dans une première application de traitement catalytique ou d'adsorption et permettant d'atteindre des teneurs en soufre, en azote et/ou en aromatiques compatibles avec les spécifications requises.

Par charge hydrocarbonée, on entend une coupe hydrocarbonée comme un gazole, un distillat, une essence ou un kérosène, ou plus généralement toute coupe pétrolière de point d'ébullition compris entre 50°C et 550°C.

Les normes concernant les teneurs en composés soufrés, en composés azotés et en aromatiques des coupes pétrolières deviennent de plus en plus sévères. Ainsi est-il prévu de baisser la teneur en soufre admise dans le gazole à 10 ppm poids à partir de 2009 en Europe et à 15 ppm poids à partir de 2006 aux Etats-Unis.

L'hydrotraitement catalytique est l'outil classique pour abaisser le taux des composés soufrés, des composés azotés et des composés aromatiques dans les coupes pétrolières.

Les procédés d'adsorption sont de plus en plus souvent envisagés en complément d'une unité d'hydrotraitement/d'hydrodésulfuration existante pour atteindre les spécifications sévères. Ils ont l'avantage de fonctionner à des conditions de pression et de température beaucoup moins sévères que l'hydrotraitement. En plus, contrairement à l'hydrotraitement, ces procédés ne nécessitent pas d'hydrogène.

Le brevet WO01/42397 revendique un procédé de désulfuration d'une coupe pétrolière sur charbon actif, les composés soufrés ayant été, au préalable, oxydés par un agent oxydant. La régénération du charbon actif s'effectue en plusieurs étapes mettant en oeuvre un désorbant liquide, préférentiellement le toluène, et de l'azote.

Une voie consiste par exemple à désulfurer les distillats moyens par adsorption des dérivés benzothiophéniques sur des adsorbants à base de charbon activé, de coke activé, de CoMo (Cobalt/ Molybdène) supporté, de zéolithes, d'alumine et/ou de silice comme décrit dans le brevet US 5 454 933. Dans ce cas le solvant de désorption est du toluène ou du xylène.

Les composés soufrés, azotés et aromatiques sont adsorbés sur l'alumine, le charbon actif, le silice, le gel de silice et les zéolithes par des mécanismes de physisorption mettant en oeuvre les forces électrostatiques de faible énergie. La surface spécifique de ces adsorbants est généralement de l'ordre de 50 à 2000 m2/g, leur diamètre équivalent est généralement de 0,01 à 10 mm. Leur volume microporeux, déterminé à l'azote, est généralement comprise entre 0,01 et 0,8 cm3/g et leur volume mésoporeux, déterminé au mercure, est généralement comprise entre 0,02 et 0,6 cm3/g.

Une autre voie consiste à adsorber les composés soufrés de type benzothiophénique, des composés azotés de type carbazole et/ou des composés aromatiques sur un agent complexant comme décrit dans la demande de brevet W0 02/24836A1 et le brevet FR2814172.

Ces voies ont montré leur intérêt mais le prix des adsorbants mis en oeuvre est d'environ 2 à 40 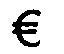 /kg, ce qui baisse sérieusement l'attrait de ces procédés, étant donné les quantités importantes d'adsorbant qui sont nécessaires pour une application de purification d'une charge hydrocarbonée, comme d'un gazole par exemple.

Les brevets RU2084281 décrivent une méthode pour fabriquer des adsorbants à partir de catalyseurs usés d'hydrocraquage ou d'hydrogénation. Mais cette fabrication nécessite un traitement complexe pour convertir un catalyseur usé en adsorbant, et notamment un traitement thermique.

### Description sommaire de l'invention

La présente invention est un procédé de purification par adsorption d'une charge hydrocarbonée mettant en ceuvre un nouvel agent d'adsorption.

Par nouvel agent d'adsorption qu'on appellera dans la suite du texte solide adsorbant usé, on entend ici un solide adsorbant ou un catalyseur ayant servi dans une première application catalytique ou une première application d'adsorption, et dont l'emploi dans la première application est devenu impossible soit en raison de la diminution des performances (effluent ne respectant plus les spécifications du procédé d'origine), soit en raison d'un coût économique prohibitif dû par exemple à une sévérisation des conditions opératoires nécessaires pour atteindre les spécifications. On entend par sévérisation un durcissement d'au moins une condition opératoire.

Dans le cas où l'application initiale est catalytique, on peut citer les catalyseurs d'hydrotraitements, d'hydrocraquage ou d'hydrogénation d'une coupe pétrolière.

Dans le cas où l'application initiale est une adsorption, on peut citer les solides suivants; le charbon actif activé chimiquement ou physiquement, l'alumine, la silice, ou le gel de silice, les zéolithes de tout type.

L'utilisation de cet agent pour la purification de charges hydrocarbonées ne requiert pas de traitement spécifique au préalable, notamment pas de traitement thermique.

La régénération de ce solide adsorbant usé s'effectue au moyen d'un désorbant approprié qui est caractérisé par son pouvoir de désorption et la possibilité de séparer le dit désorbant de la coupe pétrolière purifiée, typiquement par distillation. Généralement, on utilisera de la vapeur d'eau ou un désorbant avec une forte teneur en aromatiques. Un tel désorbant peut être par exemple le toluène, des xylènes et leurs mélanges.

Certains de ces solides adsorbants usés ont des performances d'adsorption et de régénération en purification de charges hydrocarbonées qui sont proches de celles des adsorbants classiques. Or ces solides adsorbants usés ont le grand avantage d'être beaucoup moins chers. En effet, le prix d'un tel solide adsorbant usé est le plus souvent négligeable, voire nul.

Par solide adsorbant usé, on entend ici un solide adsorbant ou un catalyseur ayant servi dans une première application catalytique ou non catalytique, et dont l'emploi dans l'utilisation initiale est devenu impossible soit en raison de la diminution des performances (effluent ne respectant plus les spécifications du procédé d'origine), soit en raison d'un coût économique prohibitif dû par exemple à une sévérisation des conditions opératoires nécessaires pour atteindre les spécifications.

De manière générale le solide adsorbant usé sera un solide adsorbant ou un catalyseur qui a perdu une partie significative de sa capacité d'adsorption ou de son activité initiale, en raison d'une contamination lors de sa première application. Cette contamination peut se manifester de différentes manières. A titre d'exemple, elle peut être causée par un blocage de l'accès aux sites actifs, par un bouchage des pores ou par le dépôt de divers produits initialement contenus dans la charge et qui se sont déposés au cours de la première application, comme par exemple du coke et des métaux.

On utilisera comme critère général de la perte de capacité d'adsorption ou d'activité la notion de diminution relative de la surface spécifique du solide adsorbant usé.

Selon l'utilisation initiale du solide adsorbant usé, cette notion pourra éventuellement être complétée par des critères plus spécifiques comme, par exemple, la teneur en coke déposé sur le solide adsorbant usé, ou la teneur en certains métaux.

On considérera donc comme solide adsorbant usé tout solide adsorbant ayant fonctionné dans une première application catalytique ou d'adsorption, et ayant perdu à la suite de cette première application entre 5% et 80% de sa surface spécifique initiale, et préférentiellement entre 10% et 60% de cette surface spécifique initiale.

Un solide adsorbant usé particulier dans ce contexte est préférentiellement un catalyseur usé provenant d'un des procédés de raffinage suivants : l'hydrotraitement, l'hydrodésulfuration, l'hydrodéazotation, l'hydrodemétallisation, l'hydrocraquage ou l'hydrogénation d'une coupe pétrolière, les performances de ce catalyseur s'étant tellement dégradées que son emploi comme catalyseur est devenu économiquement inintéressant, soit par la nécessité d'augmenter la température opératoire de manière significative, soit en raison d'une baisse notable de la sélectivité par rapport au catalyseur neuf.

Or, il a été trouvé que certains de ces solides adsorbants usés sont tout à fait efficaces comme adsorbant pour la purification de charges hydrocarbonées, et que leurs performances en adsorption et en régénération sont proches de celles des adsorbants classiques, comme de l'alumine, du charbon actif ou des zéolithes.

On peut, sans que cette liste soit limitative, citer comme exemples de solide adsorbant usé les solides suivants : catalyseurs d'hydrotraitement de gazoles, catalyseurs d'hydrotraitement des essences, catalyseurs d'hydrocraquage, charbon actif pour la purification d'air ou d'effluents gazeux, solide pour la purification d'eau.

Parmi les catalyseurs d'hydrodésulfuration utilisables, il est ainsi possible d'employer des catalyseurs comprenant de métaux du groupe VIII et éventuellement des métaux du groupe VIB dispersé sur un support. De tels catalyseurs comprennent par exemple du nickel et/ou du cobalt et éventuellement du molybdène et/ou du tungstène, ces métaux étant dispersés sur un support, par exemple une alumine ou une silice alumine.

L'avantage de la présente invention réside dans le prix d'un tel solide adsorbant usé dont la valeur marchande est généralement négligeable, voire négative au sens où l'utilisateur est souvent obligé de rémunérer le repreneur de ce type de produit.

En effet, le prix de récupération d'éventuels constituants potentiellement intéressants, comme des métaux par exemple, est souvent proche du prix de marché de ces constituants, ce qui impose des prix de rachat de ces solides adsorbant usés très faibles.

Ce solide adsorbant usé après sa seconde application, objet de la présente invention, nécessitera éventuellement un traitement ou un stockage adapté, comme tout adsorbant classique.

L'invention consiste donc en un procédé de purification par adsorption d'une charge hydrocarbonée en phase liquide ou gazeuse, constituant une seconde application, caractérisé par la mise en oeuvre d'un solide adsorbant usé, qui est un catalyseur ayant servi dans une première application catalytique, ou un adsorbant ayant servi dans une première application d'adsorption.

Le solide adsorbant usé aura généralement perdu à la suite de sa première application entre 5 et 80 % de sa surface spécifique initiale, et préférentiellement entre 10 et 60 % de cette surface spécifique initiale.

Le solide adsorbant usé pourra dans certains cas être un catalyseur usé provenant préférentiellement d'un des procédés de raffinage suivants: l'hydrotraitement, l'hydrodésulfuration, l'hydrodéazotation, l'hydrodemétallisation, l'hydrocraquage ou l'hydrogénation d'une coupe pétrolière.

Le solide adsorbant usé pourra dans d'autres cas être préférentiellement du charbon actif, activé chimiquement ou physiquement, de l'alumine, de la silice, ou du gel de silice, ou des zéolithes de tout type.

Le procédé de purification par adsorption selon l'invention fera généralement appel à au moins deux colonnes d'adsorption travaillant en adsorption ou en régénération selon la technique bien connue de l'homme du métier dite de basculement entre l'adsorbeur et le régénérateur (technique de type « swing » selon la technologie anglo-saxonne).

La régénération pourra elle-même être effectuée en deux étapes :
- Une première étape au cours de laquelle on lave une partie de la charge en partie désulfurée, désazotée et/ou désaromatisée contenue dans le volume poreux de l'adsorbant, au moyen d'un désorbant, et on récupère un effluent de première régénération en partie désulfuré, désazoté et/ou désaromatisé.
- Une deuxième étape au cours de laquelle on fait circuler dans la colonne d'adsorption le désorbant, et on récupère un effluent de deuxième régénération contenant les composés soufrés, azotés et ou aromatiques qui ont été désorbés.

Le désorbant utilisé pour la régénération du solide adsorbant sera généralement choisi parmi les composés suivants: toluène, xylènes, coupes pétrolières à forte teneur en aromatiques, vapeur d'eau ou un mélange quelconque des dits composés.

Dans certains cas où par exemple on ne disposera pas du désorbant dans des conditions économiques satisfaisantes, on pourra ne pas régénérer le solide adsorbant usé et simplement l'éliminer.

La charge hydrocarbonée à traiter sera souvent une essence, un gazole, un kérosène, un résidu de distillation atmosphérique, ou plus généralement n'importe quelle coupe pétrolière contenant des composés soufrés, azotés, et/ou aromatiques.

### Description détaillée de l'invention

De manière plus détaillée, l'invention concerne un procédé de purification par adsorption, le terme purification par adsorption désignant la désulfuration, la désazotation et/ou la désaromatisation d'une charge hydrocarbonée, avantageusement de points d'ébullition compris entre 50°C et 550°C contenant des composés soufrés, des composés azotés et/ou des composés polyaromatiques.

Ces charges seront généralement des essences de distillation atmosphérique, des essences de FCC (craquage catalytique en lit fluidisé), des gazoles de toutes origines, des résidus de distillation atmosphérique.

Le procédé comprend une étape d'adsorption de la charge dans au moins une colonne d'adsorption contenant le solide adsorbant usé. On récupère un effluent d'adsorption au moins en partie désulfuré, déazoté et/ou désaromatisé, et après un certain temps de fonctionnement, on régénère la dite colonne au moyen d'un désorbant approprié.

L'adsorption et la régénération peuvent être effectuées en phase liquide ou en phase gazeuse.

Les effluents de l'adsorption et de la régénération contiennent la charge hydrocarbonée purifiée, le désorbant et des composés soufrés, azotés et/ou aromatiques. Ces composants sont ensuite séparés dans au moins un équipement de séparation qui dans certains cas pourra être un décanteur, ou une colonne à distiller, ou n'importe quel type de technologie de séparation.

La présente invention n'est aucunement liée à la technologie de séparation utilisée pour séparer la charge hydrocarbonée purifiée des effluent issus de l'adsorbeur au cours des phases d'adsorption et de régénération.

La variante préférée du procédé, mettant en oeuvre une adsorption et une régénération en phase liquide, prévoit la régénération de la colonne d'adsorption en deux étapes :
- Une première étape au cours de laquelle on lave une partie de la charge en partie désulfurée, désazotée et/ou désaromatisée contenue dans le volume poreux de l'adsorbant, au moyen d'un désorbant, et on récupère un effluent de première régénération en partie désulfuré, désazoté et/ou désaromatisé.
- Une deuxième étape au cours de laquelle on fait circuler dans la colonne d'adsorption le désorbant, et on récupère un effluent de deuxième régénération contenant les composés soufrés, azotés et ou aromatiques qui ont été désorbés.

Quand la deuxième phase de régénération est terminée, la colonne d'adsorption passe en phase d'adsorption. Il est alors possible d'introduire directement de la charge dans la colonne d'adsorption. La charge hydrocarbonée purifiée est ensuite séparée du désorbant contenu dans le volume poreux, généralement par une colonne de distillation en aval.

La régénération en deux étapes peut être effectuée soit de manière continue ou discontinue.

Typiquement, l'adsorption et la régénération en phase liquide s'effectuent à des conditions de pression et température similaires, à savoir une pression absolue, de 0,001MPa à 3,0 MPa, de préférence entre 0,1 et 2,0 MPa, et une température inférieure à 400°C, par exemple de 20°C à 350°C et de préférence entre 40°C à 250°C.

Toutefois, des niveaux de température et pression différents entre la phase d'adsorption et la phase de régénération peuvent être envisagés afin de faciliter respectivement l'adsorption et la désorption des composés soufrés, azotés et/ou polyaromatiques.

Typiquement, l'adsorption et la régénération peuvent s'effectuer à des vitesses superficielles
- de 0,1 mm/s à 30 mm/s, de préférence de 1 mm/s à 10 mm/s, s'il s'agit d'une adsorption ou d'une régénération en phase liquide.
- de 1 cm/s à 120 cm/s, de préférence de 3 cm/s à 50 cm/s, s'il s'agit d'une adsorption ou d'une régénération en phase gazeuse.

La vitesse superficielle est définie comme le rapport du débit volumique de la charge aux conditions de l'adsorbeur sur la section vide de la colonne.

La vitesse spatiale lors d'une adsorption ou d'une régénération en phase liquide est généralement comprise entre 0,1 h⁻¹ et 15h⁻¹, et de préférence entre 0,5 h⁻¹ et 2 h⁻¹ et elle est généralement comprise entre 1 h⁻¹ et 750 h⁻¹, et de préférence entre 5 h⁻¹ et 200 h⁻¹ lors d'une adsorption ou d'une régénération en phase gazeuse. La vitesse spatiale est définie comme le rapport débit volumique de la charge aux conditions standard sur le volume de l'adsorbant.

Avantageusement, le désorbant d'une part, et la charge hydrocarbonée partiellement purifiée ainsi que les impuretés désorbées d'autre part, contenus dans l'effluent d'adsorption, dans l'effluent de première régénération et dans l'effluent de deuxième régénération sont séparés généralement par distillation. Le désorbant peut être recyclé dans la colonne où est effectuée la régénération.

Préférentiellement, la température d'ébullition du désorbant de régénération permet de le séparer de la charge hydrocarbonée par distillation.

Avantageusement, le procédé selon la présente invention peut être situé en amont ou en aval d'une unité d'hydrotraitement.

Avantageusement, l'effluent de deuxième régénération contenant les impuretés désorbées peut être envoyé en amont d'une unité d'hydrotraitement.

Selon une autre caractéristique, si la charge hydrocarbonée peut être divisée en une fraction riche et en une fraction pauvre en composés soufrés, azotés et/ou polyaromatiques, par exemple par distillation, seule la fraction riche en composés soufrés, azotés et/ou polyaromatiques est introduite comme charge dans la colonne d'adsorption.

Avantageusement, on peut opérer l'étape d'adsorption de la charge dans au moins une colonne d'adsorption tandis qu'on opère l'étape de régénération dans au moins une autre colonne, les deux colonnes travaillant en alternance en phase d'adsorption et en phase de régénération.

Selon une autre caractéristique, le solide adsorbant usé n'est pas régénéré après son utilisation dans le procédé de la présente invention mais éliminé.

Selon une autre caractéristique, la régénération peut être effectuée à des conditions opératoires différentes de celles de l'adsorption, et notamment à une pression inférieure et une température supérieure pour faciliter la régénération.

Selon une autre caractéristique, la charge hydrocarbonée contenue dans le volume poreux lors des basculements entre l'adsorption et la régénération peut être lavée à l'aide d'un gaz chaud, comme par exemple l'azote, l'hydrogène ou la vapeur d'eau. Dans ce cas, les séparations peuvent être réalisées par décantation.

Les adsorbeurs sont typiquement des lits fixes selon la technique de basculement décrite ci-après, mais l'invention peut également être réalisée par tout autre type de procédé tel que le lit mobile ou le lit fluidisé. Cette technique de basculement entre au moins deux adsorbeurs, l'un passant de la phase d'adsorption à la phase de régénération, l'autre passant simultanément de la phase de régénération à la phase d'adsorption est également appelée "swing" selon la terminologie anglo-saxonne.

Du fait que l'on cherche à utiliser le solide adsorbant usé pour son coût très faible voire nul, il est préféré de ne pas grever ce coût par des traitements ayant par exemple pour objet de modifier la granulomètrie, bien qu' un tel traitement en amont de la seconde application, reste dans le cadre de la présente invention.

Dans ce cas, le choix de la technologie de la seconde application en lit fixe, mobile ou fluidisé sera en grande partie dicté par la granulométrie du solide adsorbant usé telle que résultant de sa première application.

Selon une caractéristique avantageuse du procédé, on peut mélanger l'effluent d'adsorption et l'effluent de première régénération, distiller le mélange pour en éliminer le désorbant, et récupérer un effluent hydrocarboné aux spécifications requises en soufre, en azote et/ou en aromatiques.

Selon une autre caractéristique, l'effluent de deuxième régénération peut être distillé et l'on récupère un résidu enrichi en composés soufrés, azotés et/ou aromatiques, et un distillat contenant le désorbant que l'on recycle dans la colonne où s'effectue la régénération. Ledit résidu peut être déclassé en un produit à une valeur marchande inférieure à celle de la charge hydrocarbonée purifiée. A titre d'exemple, si la charge hydrocarbonée à purifier est un gazole, le résidu peut être valorisé comme fuel domestique.

De manière avantageuse, le fraction pauvre en composés soufrés, azotés et/ou polyaromatiques de la charge hydrocarbonée, décrite ci avant, peut être mélangée à la charge hydrocarbonée issue de l'effluent d'adsorption et/ou de l'effluent de première régénération après distillation, et/ou du mélange des deux effluents précédents pour obtenir un carburant aux spécifications requises en soufre, azote et/ou en aromatiques.

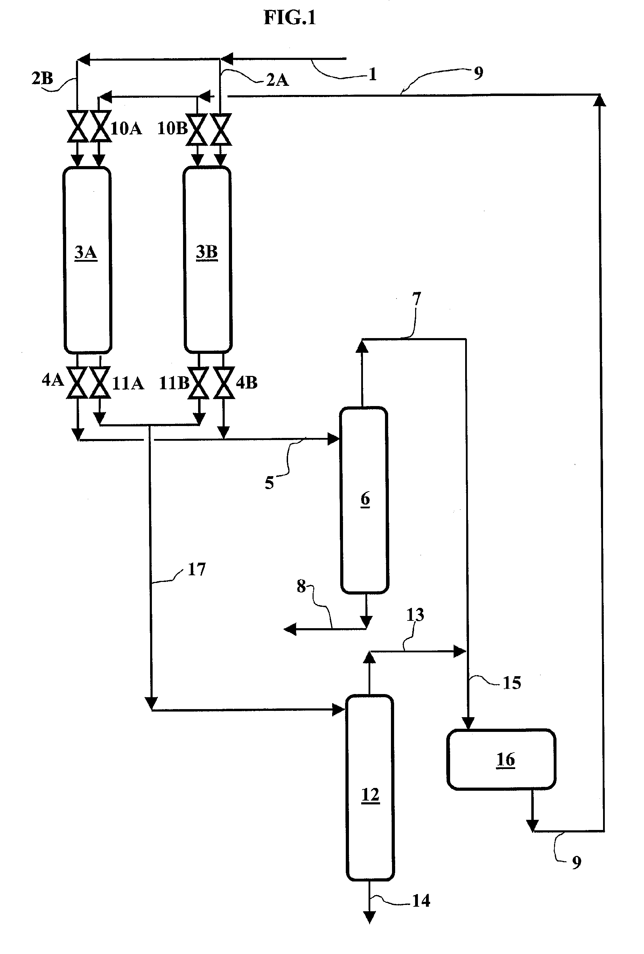

La mise en oeuvre du solide adsorbant usé dans le procédé selon l'invention sera mieux comprise au vu de la Figure 1 qui illustre schématiquement le procédé d'adsorption et de régénération de l'adsorbant dans le cas de la désulfuration ultime d'un gazole.

Par gazole, on entend une coupe pétrolière dont la température d'ébullition est comprise entre environ 150°C et 450°C. Ce cas ne limite en rien la portée de l'invention à d'autres coupes pétrolières, et à d'autres composés à enlever, en particulier des composés azotés, neutres et basiques, et des composés polyaromatiques.

Selon la figure 1, le gazole à désulfurer (1) est envoyé vers le traitement d'adsorption/désorption qui comporte au moins deux adsorbeurs (3a) et (3b), remplis du solide adsorbant usé, un au moins des adsorbeurs étant en phase d'adsorption, les autres étant en phase de régénération. Dans la suite, par souci de simplification, l'invention est décrite pour un cas comprenant deux adsorbeurs. Le gazole à purifier (1) est donc envoyé aux moyens d'un système (2a) de tuyauterie et vannes adaptées, vers l'adsorbeur (3a) dans lequel les composés à éliminer, principalement les composés soufrés dans cet exemple d'application, sont adsorbés sélectivement sur le solide adsorbant usé.

L' effluent (4a) issu de l'adsorbeur (3a) contient essentiellement du gazole purifié, mais également une fraction non négligeable de désorbant. En effet chaque fois qu'un adsorbeur est remis en mode adsorption après avoir été régénéré, il est encore rempli du désorbant qui a servi à le régénérer.

L'effluent (4a) est ensuite dirigé au travers d'une ligne (5) vers une colonne de distillation (6) qui sépare le gazole purifié (8) d'une part, et le désorbant (7) d'autre part.

Au fur et à mesure que l'adsorbant contenu dans l'adsorbeur (3a) se charge en composés soufrés, la teneur en soufre dans l'effluent (4a) augmente. Lorsque cette teneur atteint un seuil limite de soufre (suivi par des analyses régulières de la teneur en soufre de l'effluent (4a)), l'adsorbeur (3a) passe, aux moyens des tuyauteries et vannes (2a) et (2b) de la phase d'adsorption à la phase de régénération, tandis que l'adsorbeur (3b) passe de la phase de désorption à la phase d'adsorption.

L' adsorbeur qui passe de la phase d'adsorption à la phase de régénération contient encore du gazole dans le volume poreux, volume qui comprend les interstices et les pores de l'agent d'adsorption. La teneur en soufre de ce gazole se situe entre celle du gazole (1) et celle du gazole purifié (4a).

La régénération de l'agent d'adsorption consiste à entraîner les composés soufrés azotés et aromatiques par élution au moyen du désorbant. La régénération selon le mode de réalisation préféré s'effectue en deux phases.

Phase I de la régénération : Du désorbant (9), qui provient d'une source externe ou du désorbant recyclé du procédé, est injecté dans l'adsorbeur (3b) par exemple, au moyen de tuyauterie et vannage adaptés (10b). Lors de cette première phase de la régénération, l'effluent de l'adsorbeur (3b) contient une partie significative du gazole provenant du volume poreux et une faible quantité de désorbant. Les teneurs en soufre, azote et aromatiques de cette partie du gazole se trouvent entre celles du gazole avant le traitement par adsorption selon l'invention et celles du gazole issu de la phase d'adsorption. Cette phase de la régénération prend fin quand la teneur en soufre dans l'effluent (4b) commence à augmenter de manière significative à cause de l'apparition des composés soufrés désorbés.

Ceci est généralement le cas après l'injection d'un volume de désorbant correspondant à 30% à 700% du volume poreux de l'agent d'adsorption. Du fait de sa faible teneur en soufre, cette partie de l'effluent (4b) peut être mélangée avec l'effluent de la zone d'adsorption (4a), le tout étant injecté dans la colonne de distillation (6). On récupère alors un effluent de tête (7) contenant le désorbant et un effluent de fond (8) contenant le gazole désulfuré.

Les seuils limites de soufre pour lesquels on arrête la phase d'adsorption et la première phase de régénération sont choisis de manière à ce que la teneur en soufre, azote et/ou polyaromatiques du gazole issu du mélange des lignes (4a) et (4b) soit inférieure ou égal à la spécification requise.

La phase II de la régénération commence dès lors que la teneur en soufre dans l'effluent (4b) de la première phase de régénération de l'adsorbeur (3b) augmente de manière significative suite à l'apparition des composés soufrés désorbés.

L'effluent de l'adsorbeur (3b) est alors composé du reste du gazole du volume poreux (la partie qui n'est pas sortie de l'adsorbeur lors de la première phase de régénération) et du désorbant qui contient les composés soufrés désorbés.

Cet effluent de la deuxième phase de régénération (11 b) est dirigé, au moyen de tuyauterie et vannage appropriés vers une colonne de distillation (12) qui sépare le désorbant (13) d'une part, et un gazole soufré (14) d'autre part.

Compte tenu de leur plage de températures d'ébullition, qui est identique à celle du gazole, les composés soufrés se recombinent et sortent ensemble avec le gazole (14) de la colonne (12). Les flux de désorbant (7) et (13) en sortie des colonnes (6) et (12) peuvent être avantageusement regroupés dans un ballon (16) et recyclés dans le procédé vers les adsorbeurs (3a) ou (3b). Le flux de gazole purifié (8) constitue le gazole aux spécifications.

Le flux (14) obtenu en fond de la colonne (12) qui contient pratiquement la totalité des composés soufrés désorbés, peut dans certains cas être recyclé dans une unité telle qu'une unité d'hydrodésulfuration de gazoles ou un hydrocraquage lorsqu'une de ces unités existe à proximité. Dans d'autres cas, il subit un déclassement, c'est-à-dire qu'il est commercialisé à une valeur marchande plus faible que le gazole purifié, mais sa teneur en soufre reste suffisamment basse pour que cet effluent puisse garder une valeur marchande élevée.

En ce qui concerne la deuxième phase de régénération, un volume de désorbant correspondant à 30 à 5000% du volume poreux de l'agent d'adsorption, peut être nécessaire afin de désorber les composés adsorbés et de préférence de 300 à 1000 % du volume poreux.

Les avantages de ce mode de réalisation préféré résident dans le fait que, grâce à la régénération en deux phases, il est d'une part possible d'éviter le déclassement de la fraction de gazole contenue dans l'effluent (4b), et d'autre part la qualité de la fraction de gazole correspondant au flux (14) est suffisante pour constituer un produit valorisable. Les problèmes de traitement/stockage des composés soufrés, azotés et/ou aromatiques extraits sont ainsi totalement éliminés.

Il a été démontré expérimentalement qu'il est ainsi possible de récupérer entre 30% et 100% du gazole au moins en partie désulfuré, déazoté et/ou déramomatisé contenu dans le volume poreux lors de la première phase de régénération. Seulement les 0% à 70% restants du gazole contenu dans le volume poreux de l'adsorbant sont soit à recycler avant un hydrotraitement ou un hydrocraquage soit à déclasser, compte tenu de la teneur en soufre. Avantageusement, si le déclassement s'avère nécessaire, ce gazole peut être déclassé en fioul domestique. Par rapport à une régénération en une seule phase conduisant au recyclage ou au déclassement de la totalité du gazole contenu dans le volume poreux de l'adsorbant, ceci représente un avantage économique substantiel.

### Exemple

Des tests d'adsorption et de régénération sont réalisés en mettant en oeuvre deux solides adsorbants usés, un catalyseur d'hydrotraitement de gazoles usé et un catalyseur d'hydrotraitement d'essences ex-FCC (essence de craquage catalytique en lit fluidisé ou fluid catalytic crackings selon la terminologie anglo-saxonne) usé, ainsi qu'un adsorbant classique, du charbon actif activé chimiquement.

Dans leurs états actuels, le catalyseur d'hydrotraitement des gazoles usé nécessite une augmentation de la température de 19°C et le catalyseur d'hydrotraitement des essences une augmentation de la température de 31 °C par rapport aux catalyseurs neufs pour atteindre les taux de désulfuration des catalyseurs neufs. Une telle augmentation de la température limiterait l'intérêt économique du procédé d'hydrotraitement, d'une part, et favoriserait la formation de coke sur le catalyseur conduisant à une perte d'activité accélérée, d'autre part.

Le tableau suivant résume les propriétés des deux catalyseurs d'hydrotraitement testés :

| | Catalyseur d'hydrodésulfuration de gazoles usé | Catalyseur d'hydrodésulfuration d'essences usé |
|---|---|---|
| Surface spécifique | 183 m2/g | 147 m2/g |
| Surface spécifique initiale | 205 m2/g | 200 m2/g |
| Forme | Extrudés trilobe | Extrudés cylindriques |
| Diamètre | 1,2 mm | 1,2 mm |
| Densité de chargement | 0,78 kg/l | 0,78 kg/l |
| Volume poreux | 0,44 cm3/g | 0,50 cm3/g |
| Matériau support | AI2O3 | AI2O3 |
| Teneurs en métaux | | |
| Nickel (NiO) | 3,3 % poids | - |
| Molybdène (MoO3) | 16,5 % poids | 14,0 % poids |
| Cobalt (CoO) | - | 3,0 % poids |
| Coke | 7,6 % poids | 5,2 % poids |
| Poisons | | |
| Fer (Fe) | 560 ppm poids | 400 ppm poids |
| Gallium (Ga) | < 100 ppm poids | 100 ppm poids |
| Nickel (Ni) | | 280 ppm poids |
| Sélénium (Se) | - | 100 ppm poids |
| Silice (Si) | 400 ppm poids | 8000 ppm poids |
| Titane (Ti) | - | 350 ppm poids |
| Chlore (CI) | 250 ppm poids | - |
| Calcium (Ca) | < 100 ppm poids | - |
| Cuivre (Cu) | < 100 ppm poids | - |

Du charbon actif activé chimiquement avec une surface spécifique de 1442 m2/g et avec une masse spécifique de chargement de 400 kg/m3 a été utilisé.

Les tests d'adsorption et de régénération visent à purifier, c'est-à-dire à désulfurer, à désazoter et à désaromatiser, une charge hydrocarbonée. Il s'agit d'un gazole modèle constitué de :
- 70,6 % poids d'heptane,
- 50 ppm poids de soufre sous forme de Dibenzothiophène (DBT),
- 40 ppm poids d'azote sous forme d'indole,
- 22,4 % poids de monoaromatiques sous forme de PDEB (para-di-ethyle-benzène),
- 6,4 % poids de diaromatiques sous forme de naphtalène,
- 0,4 % poids de triaromatiques sous forme de phénantrène.

Le solvant de régénération est du toluène.

L'adsorption a été réalisée à température ambiante et pression atmosphérique en phase liquide. La régénération a été réalisée par du toluène à 200°C et à pression atmosphérique en phase gazeuse.

Les capacités d'adsorption par rapport aux différents composants et la quantité de désorbant nécessaire pour régénérer l'adsorbant sont déterminées par les courbes de perçage et de déperçage. Pour cela une colonne avec un diamètre interne de 1 cm est chargée de 22 ml d'adsorbant. Les débits de charge hydrocarbonée et de désorbant sont de 5 ml/min.

Dans un premier temps la charge hydrocarbonée est injectée et les courbes de perçage des différents composés sont déterminées (c'est-à-dire les courbes d'évaluation de la teneur en ces composés en sortie de l'adsorbeur).

Dans un deuxième temps, quand l'adsorbant est saturé en soufre, azote, monoaromatiques, diaromatiques et triaromatiques, le désorbant est injecté pour régénérer le solide. Cette étape de régénération prend fin quand la teneur en soufre dans l'effluent est inférieure à la limite de détectabilité de 1 ppm poids de soufre.

Le tableau suivant résume les performances en adsorption et en régénération qui sont déterminées. Il s'agit de :
- la capacité d'adsorption de soufre exprimée en masse de soufre adsorbé par masse de solide
- la capacité d'adsorption d'azote exprimée en masse d'azote adsorbé par masse de solide
- la capacité d'adsorption de composés monoaromatiques exprimée en masse de composés monoaromatiques adsorbé par masse de solide
- la capacité d'adsorption de composés diaromatiques exprimée en masse de composés diaromatiques adsorbé par masse de solide
- la quantité de toluène injecté qui est nécessaire afin d'obtenir un effluent d'adsorbeur dont la teneur en soufre est inférieur à la limite de détectabilité.

| | Catalyseur d'hydrodé-sulfuration de gazoles usé | Catalyseur d'hydrodé-sulfuration d'essences usé | Charbon actif (activé chimiquement) |
|---|---|---|---|
| Adsorption : capacités d'adsorption | | | |
| Capacité d'adsorption de soufre q_{Soufre} en mg_{Soufre}/g_{adsorbant} | 0,091 | 0,021 | 0,463 |
| Capacité d'adsorption d'azote q_{Azote} en mg_{Azote}/g _{adsorbant} | 0,49 | 0,63 | 1,02 |
| Capacité d'adsorption de monoaromatiques q_{Monoaromatiques} en mg_{Monoaromatiques}/g _{adsorbant} | 16,7 | 16,6 | 324 |
| Capacité d'adsorption de diaromatiques q_{Diaromatiques} en mg_{Diaromatiques}/g _{adsorbant} | 13,0 | 12,7 | 107 |

| Régénération | | | |
|---|---|---|---|
| Quantité de toluène pour désorber et sortir le soufre (V_{toluène}/V_{adsorbant}) | 2,67 | 2,40 | 2,69 |

Les capacités d'adsorptions des deux catalyseurs d'hydrotraitement usés vis-à-vis des différents composants contenus dans le gazole sont bien évidemment inférieures à celles du charbon actif, en particulier en ce qui concerne la désulfuration en raison principalement de la différence de surface spécifique.

Par contre, la quantité de désorbant nécessaire pour régénérer l'adsorbant est sensiblement la même pour les trois solides considérés.

A titre d'exemple, on considère la désulfuration sélective d'un gazole, sortant d'une unité de hydrodésulfuration, de 50 à 10 ppm poids de soufre par adsorption. La composition de ce gazole égale celle de la charge modèle et l'adsorption est effectuée à pression atmosphérique et à température ambiante. Une vitesse spatiale de 1,2 h⁻¹ est envisagée pour l'adsorption. Un système d'adsorbeurs travaillant en mode basculement, c'est-à-dire en alternance entre l'adsorption et la régénération, est utilisé.

La capacité d'adsorption de soufre amoindrie des catalyseurs usés par rapport au charbon actif se traduit par un perçage des composés soufrés en sortie des adsorbeurs plus rapide. Cela est compensé par une augmentation du basculement entre l'adsorption et la régénération, conduisant à une augmentation de la quantité de gazole à déclasser.

En effet, chaque fois qu'un adsorbeur est mis en régénération, une partie du gazole contenu dans le volume poreux sera déclassée.

Dans ces conditions, il faut un volume d'adsorbant correspondant à 1/1,2 m³ par m³/h de gazole à traiter, correspondant à la vitesse spatiale de 1,2 h⁻¹ par adsorbeur. La quantité totale d'adsorbant est multipliée par un facteur 2 en raison du fonctionnement en basculement, qui suppose deux adsorbeurs.

L'utilisation du solide adsorbant usé dont la valeur marchande est généralement négligeable comme expliqué plus haut, conduit à une économie considérable par rapport à l'utilisation d'un adsorbant classique, tel que le charbon actif dans notre exemple.

Si l'on considère un débit de gazole de 166 m3/h, correspondant à une unité d'hydrotraitement moyenne d'une capacité de 25 000 baril/jour, il faut une quantité d'adsorbant de 276 m³.

Si l'on considère un prix de charbon actif de 10 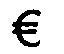 /kg, le poste d'adsorbant s'élève à 1104 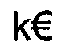 et il faut faire cet investissement à une fréquence correspondant à la durée de vie de l'adsorbant. Si l'on considère une durée de vie de l'adsorbant typique de 4 ans, l'économie réalisée sur ce poste, due à l'utilisation du solide adsorbant usé, sera donc de 276 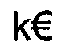 par an, ce qui est tout à fait significatif.

## Revendications

1. Procédé de purification par adsorption d'une charge hydrocarbonée en phase liquide ou gazeuse, constituant une seconde application, **caractérisé par** la mise en oeuvre d'un solide adsorbant usé qui est un catalyseur usé provenant d'un des procédés de raffinage suivants : l'hydrotraitement, l'hydrodésulfuration, l'hydrodéazotation, l'hydrodemétallisation, l'hydrocraquage ou l'hydrogénation d'une coupe pétrolière.

2. Procédé de purification par adsorption selon la revendication 1, dans lequel le solide adsorbant usé a perdu à la suite de sa première application entre 5 et 80 % de sa surface spécifique initiale, et préférentiellement entre 10 et 60 % de cette surface spécifique initiale.

3. Procédé selon l'une des revendications 1 ou 2, dans lequel le catalyseur usé est un catalyseur d'hydrodésulfuration de gazoles ou d'essences usé.

4. Procédé de purification par adsorption selon l'une des revendications 1 à 3, dans lequel on effectue selon la technique de basculement, une étape d'adsorption dans au moins une colonne d'adsorption, et une étape de régénération dans au moins une autre colonne d'adsorption au moyen d'un désorbant approprié, la dite régénération étant effectuée en deux étapes :
- Une première étape au cours de laquelle on lave une partie de la charge en partie désulfurée, désazotée et/ou désaromatisée contenue dans le volume poreux de l'adsorbant, au moyen d'un désorbant, et on récupère un effluent de première régénération en partie désulfuré, désazoté et/ou désaromatisé.
- Une deuxième étape au cours de laquelle on fait circuler dans la colonne d'adsorption le désorbant, et on récupère un effluent de deuxième régénération contenant les composés soufrés, azotés et ou aromatiques qui ont été désorbés.

5. Procédé de purification par adsorption selon l'une des revendications 1 à 3 dans lequel le solide adsorbant usé n'est pas régénéré.

6. Procédé de purification par adsorption selon l'une des revendications 1 à 4 dans lequel le désorbant utilisé pour la régénération du solide adsorbant usé est choisi parmi les composés suivants: toluène, xylènes, coupes pétrolières à forte teneur en aromatiques, vapeur d'eau ou un mélange quelconque des dits composés.

7. Procédé de purification par adsorption selon l'une des revendications 1 à 6 dans lequel la charge hydrocarbonée à traiter est une essence, un gazole, un kérosène, un résidu de distillation atmosphérique.
